# EUROPÄISCHE PATENTSCHRIFT

(11) **EP 3 668 742 B1**
(45) Veröffentlichungstag und Bekanntmachung des Hinweises auf die Patenterteilung: **10.11.2021**
(21) Anmeldenummer: 18752119.0
(22) Anmeldetag: 02.08.2018
(51) Int. Cl.: B60K 35/00, G01C 21/36, B60R 1/00

(54) **VERFAHREN ZUM BETREIBEN EINES FAHRERASSISTENZSYSTEMS EINES KRAFTFAHRZEUGS SOWIE KRAFTFAHRZEUG**
METHOD FOR OPERATING A DRIVER ASSISTANCE SYSTEM OF A MOTOR VEHICLE AND MOTOR VEHICLE
PROCÉDÉ POUR FAIRE FONCTIONNER UN SYSTÈME D'AIDE À LA CONDUITE D'UN VÉHICULE À MOTEUR ET VÉHICULE À MOTEUR

(30) Priorität: 15.08.2017 DE 102017214225
(43) Veröffentlichungstag der Anmeldung: 24.06.2020
(73) Patentinhaber: Volkswagen Aktiengesellschaft, 38440 Wolfsburg (DE)
(72) Erfinder: SCHÖNING, Volkmar, 30900 Wedemark (DE); HÜSEMANN, Frank, 38162 Cremlingen (DE)
(86) Internationale Anmeldenummer: PCT/EP2018/070926
(87) Internationale Veröffentlichungsnummer: WO 2019/034433

(56) Entgegenhaltungen:
- DE-A1-102010 040 803
- US-A1- 2010 157 430
- US-A1- 2015 291 160

## Beschreibung

Die Erfindung betrifft ein Verfahren zum Betreiben eines Fahrerassistenzsystems eines Kraftfahrzeugs während einer Fahrt des Kraftfahrzeugs gemäß dem Oberbegriff von Patentanspruch 1 sowie ein Kraftfahrzeug mit einem Fahrerassistenzsystem.

Ein Verfahren zum Betreiben eines Fahrerassistenzsystems eines Kraftfahrzeugs während einer Fahrt des Kraftfahrzeugs ist bereits aus der US 2015/0291160 A1 bekannt. Während der Fahrt wird dem Fahrer des Kraftfahrzeugs auf wenigstens einem Anzeigeelement ein virtuelles Fahrzeug angezeigt. Hierbei wird dem Fahrer das virtuelle Kraftfahrzeug bei einer Folgefahrt eines realen Fahrzeugs angezeigt, sofern das reale Fahrzeug für höchstens ein definiertes Zeitintervall von einer Erfassungseinrichtung des Kraftfahrzeugs nach dessen Erfassung nicht erfasst wird. Nach dem definierten Zeitintervall wird das virtuelle Fahrzeug ausgeblendet. Das virtuelle Fahrzeug wird alternativ auch ausgeblendet, wenn das reale Fahrzeug von der Erfassungseinrichtung erfasst wird.

Des Weiteren ist aus der DE 10 2013 207 546 A1 ein System zum Testen einer Abstandsregelvorrichtung eines Fahrzeugs bekannt. Das System weist eine Manipulationseinheit auf, die ausgebildet ist, ein virtuelles Objekt zu erzeugen, welches sich vor dem Fahrzeug befindet. Des Weiteren ist die Manipulationseinheit dazu ausgebildet, ein Sensorsignal einer Abstandssensoreinrichtung derart zu manipulieren, dass Daten des manipulierten Sensorsignals das virtuelle, sich vor dem Fahrzeug befindende Objekt repräsentieren. Mittels einer Abstandsregelvorrichtung des Systems kann eine Fahrzeuggeschwindigkeit des Fahrzeugs beeinflusst werden, wobei die Abstandsregelvorrichtung dazu ausgebildet ist, abhängig von dem manipulierten Sensorsignal ein Stellsignal zum Beeinflussen zumindest eines Stellglieds für die Fahrzeuggeschwindigkeit zu erzeugen.

Darüber hinaus ist aus der DE 10 2011 050 341 A1 eine Fahrzeuggeschwindigkeitssteuervorrichtung bekannt, wobei ein Abstand zwischen einem Kraftfahrzeug und einem sich in Fahrtrichtung vor dem Kraftfahrzeug befindenden Fahrzeug unter Zuhilfenahme eines virtuellen Fahrzeugs ermittelt wird.

Weiterhin offenbart die US 2010/0157430 A1 ein Fahrzeuganzeigesystem, mit einer Bildprojektionseinrichtung, mittels welcher ein virtuelles Bild an einer entsprechenden Position in einer Szenerie auf einem Fahrtweg auf Grundlage einer von einer Informationserfassungseinheit ermittelten Umgebungsinformation erzeugbar ist. Mittels der Bildprojektionseinrichtung ist ein das virtuelle Bild charakterisierendes Lichtsignal in ein Auge eines Fahrers eines das Fahrzeuganzeigesystem aufweisenden Kraftwagens projizierbar.

Überdies ist aus der DE 10 2010 040 803 A1 ein visuelles Fahrerinformations- und Warnsystem für einen Fahrer eines Kraftfahrzeugs bekannt. Mittels dieses visuellen Fahrerinformations- und Warnsystems ist dem Fahrer eine zweidimensionale Projektion mindestens eines tatsächlich vorhandenen, stationären und/oder beweglichen Objekts darstellbar, welches für den Fahrer nicht sichtbar ist.

Aufgabe der vorliegenden Erfindung ist es, ein Verfahren zum Betreiben eines Fahrerassistenzsystems eines Kraftfahrzeugs während einer Fahrt des Kraftfahrzeugs sowie ein Kraftfahrzeug mit einem Fahrerassistenzsystem zu schaffen, mittels welchen der Fahrer des Kraftfahrzeugs während der Fahrt vorteilhaft unterstützt werden kann.

Diese Aufgabe wird erfindungsgemäß durch ein Verfahren sowie durch ein Kraftfahrzeug mit den Merkmalen der unabhängigen Patentansprüche gelöst. Vorteilhafte Ausgestaltungen mit zweckmäßigen Weiterbildungen der Erfindung sind in den jeweils abhängigen Ansprüchen sowie in der folgenden Beschreibung angegeben.

Ein erster Aspekt der Erfindung betrifft ein Verfahren zum Betreiben eines Fahrerassistenzsystems eines Kraftfahrzeugs während einer Fahrt des Kraftfahrzeugs. Bei dem Verfahren wird dem Fahrer des Kraftfahrzeugs auf wenigstens einem Anzeigeelement ein virtuelles Fahrzeug angezeigt.

Um nun den Fahrer während der Fahrt des Kraftfahrzeugs besonders vorteilhaft, insbesondere beim Steuern beziehungsweise Führen des Kraftfahrzeugs, unterstützen zu können, ist es vorgesehen, dass zur Unterstützung des Fahrers das virtuelle Fahrzeug hinsichtlich seiner Größe und/oder Position und/oder seiner Erscheinung auf dem Anzeigeelement variiert wird, während das virtuelle Fahrzeug auf dem Anzeigeelement angezeigt wird. Das bedeutet, dass während der Fahrt des Kraftfahrzeugs bei oder infolge einer Aktivierung des Fahrerassistenzsystems das virtuelle Fahrzeug auf dem Anzeigeelement durchgängig angezeigt wird. Das virtuelle Fahrzeug kann dabei auf einer Windschutzscheibe des Kraftfahrzeugs oder auf einem sogenannten Combiner erzeugt, d.h. darauf abgebildet werden, wobei der Combiner an der Windschutzscheibe angeordnet sein kann. Mit anderen Worten kann das Anzeigeelement als Windschutzscheibe oder als Combiner des Kraftfahrzeugs ausgebildet sein. Bei dem virtuellen Fahrzeug handelt es sich um eine Darstellung eines Fahrzeugs, insbesondere eines Kraftwagens, welche in einem Sichtbereich des Fahrers des Kraftfahrzeugs auf dem Anzeigeeelement angezeigt wird. Bei dem virtuellen Fahrzeug kann es sich beispielsweise um eine dreidimensionale Darstellung des Fahrzeugs oder um ein Piktogramm des Fahrzeugs handeln. Unter einer Variation des virtuellen Fahrzeugs hinsichtlich seiner Größe ist zu verstehen, dass dieses zur Unterstützung des Fahrers in unterschiedlichen Größen angezeigt werden kann. Beispielsweise wird das virtuelle Fahrzeug zur Charakterisierung einer durchzuführenden Beschleunigung kleiner dargestellt als zur Charakterisierung einer durchzuführenden Abbremsung.

Soll dem Fahrer angezeigt werden, dass dieser die Geschwindigkeit des Kraftfahrzeugs reduzieren soll, so kann durch eine dynamische Vergrößerung des virtuellen Fahrzeugs dem Fahrer ein Annähern an das virtuelle Fahrzeug illustriert werden, um ein Abbremsen des Fahrers auszulösen. Beispielsweise kann durch eine dynamische Verkleinerung des virtuellen Fahrzeugs eine Vergrößerung eines Abstands zwischen dem virtuellen Fahrzeug und dem Kraftfahrzeug illustriert werden, sodass der Fahrer des Kraftfahrzeugs dazu angeregt wird, eine Geschwindigkeit des Kraftfahrzeugs zu erhöhen. Unter einer Variation der Position des virtuellen Fahrzeugs zur Unterstützung des Fahrers ist zu verstehen, dass das virtuelle Fahrzeug dem Fahrer des Kraftfahrzeugs an unterschiedlichen Positionen angezeigt werden kann, um diesen zu einem Steuern des Kraftfahrzeugs in eine durch die Position des virtuellen Fahrzeugs vorgegebene Richtung anzuregen. Beispielsweise kann durch eine Positionsänderung des virtuellen Fahrzeugs relativ zu dem Anzeigeelement dem Fahrer des Kraftfahrzeugs eine durchzuführende Kurvenfahrt vorgeschlagen werden. Unter der Erscheinung ist bei dem virtuellen Fahrzeug auf dem Anzeigeelement eine Darstellungsart beziehungsweise eine Ausgestaltung (Design) des virtuellen Fahrzeugs hinsichtlich seiner Form und/oder Farbe zu verstehen. Dabei ist unter der Variation der Erscheinung zu verstehen, dass das virtuelle Fahrzeug durchgängig auf dem Anzeigeelement angezeigt wird und dabei in seiner Form und/oder in seiner Farbe zumindest bereichsweise verändert wird.

Erfindungsgemäß ist vorgesehen, dass wenigstens ein aktueller Ort des Kraftfahrzeugs ermittelt wird, wobei das virtuelle Fahrzeug in Abhängigkeit von dem ermittelten Ort angezeigt wird. Dabei kann der aktuelle Ort des Kraftfahrzeugs beispielsweise mittels Koordinaten des Kraftfahrzeugs ermittelt werden. Hierfür können beispielsweise das Globale Positionierungs System (GPS), Galileo, Beidou oder das Globale Satelliten Navigationssystem (GLONASS) herangezogen werden. In Abhängigkeit von den Koordinaten kann ein dem ermittelten Ort zugehöriges Land und oder eine zugehörige Region ermittelt werden. Dies ermöglicht, dass das virtuelle Fahrzeug länderspezifisch und/oder regionenspezifisch in Abhängigkeit von dem ermittelten Ort an den Fahrer des Kraftfahrzeugs mittels des Anzeigeelements ausgegeben wird. Hierdurch können für den Fahrer des Kraftfahrzeugs besonders einfach länderspezifische Verkehrsregeln und/oder regionenspezifische Verkehrsregeln durch ein entsprechendes Anzeigen des virtuellen Fahrzeugs übermittelt werden.

Mittels des Verfahrens kann dem Fahrer eine besonders vorteilhafte Fahrweise des Kraftfahrzeugs vorgeschlagen werden, welche der Fahrer beim Steuern des Kraftfahrzeugs umsetzen kann. Mittels des virtuellen Fahrzeugs ist dem Fahrer des Kraftfahrzeugs die vorteilhafte Fahrweise besonders einfach und besonders verständlich mitteilbar. Darüber hinaus können dem Fahrer des Kraftfahrzeugs mittels des virtuellen Fahrzeugs eine Vielzahl von Fahrinformationen, welche dieser in das Steuern des Kraftfahrzeugs mit einbeziehen sollte, besonders einfach und übersichtlich mitgeteilt werden. Bei den Fahrinformationen kann es sich beispielsweise um eine Geschwindigkeitsbegrenzung und/oder um eine Verkehrsführung und/oder um eine vorgeschlagene Fahrroute eines Navigationssystems des Kraftfahrzeugs handeln.

Es hat sich in einer Weiterbildung der Erfindung als vorteilhaft gezeigt, wenn das virtuelle Fahrzeug in seiner Erscheinung derart variiert wird, dass, während zumindest ein erster Teilbereich des virtuellen Fahrzeugs auf dem Anzeigeelement angezeigt wird und eine Variation des ersten Teilbereichs unterbleibt, wenigstens ein von dem ersten Teilbereich unterschiedlicher zweiter Teilbereich des virtuellen Fahrzeugs variiert wird.

Mit anderen Worten wird der erste Teilbereich des virtuellen Fahrzeugs konstant in einer gleichen Form, Farbe, Position und Größe angezeigt, während der zweite Teilbereich des virtuellen Fahrzeug hinsichtlich seiner Form und/oder seiner Größe und/oder seiner Farbe und/oder seiner Position zumindest einmal, insbesondere mehrmals in definierten Zeitabständen variiert wird. Hierdurch kann beispielsweise eine Fahrtrichtungsanzeige oder eine aktivierte Warnblinkanlage des virtuellen Fahrzeugs illustriert werden. Durch eine Darstellung der aktivierten Fahrtrichtungsanzeige kann dem Fahrer die durch die Navigationseinrichtung ermittelte Fahrtroute angezeigt werden. Eine Darstellung der aktivierten Warnblinkanlage ermöglicht eine besonders vorteilhafte Weckung der Aufmerksamkeit des Fahrers des Kraftfahrzeugs für eine Gefahrensituation.

Vorzugsweise wird das virtuelle Fahrzeug in einer Sichtachse des Fahrers auf das Anzeigeelement mittels einer Projektionseinrichtung projiziert. Hierbei kann es sich bei der Projektionseinrichtung um einen Kopf-Oben-Bildschirm, welcher auch als Head-Up-Display bezeichnet wird, handeln. Ein Head-up-Display dient dazu, ein auf das Anzeigeelement projiziertes Bild, das auch als virtuelles Bild bezeichnet wird, zu erzeugen. Bei dem virtuellen Bild handelt es sich vorliegend um das virtuelle Fahrzeug. Das Projizieren des virtuellen Fahrzeugs in die Sichtachse des Fahrers hat den Vorteil, dass der Fahrer während des Steuerns des Kraftfahrzeugs seinen Blick auf eine Fahrbahn des Kraftfahrzeugs richten kann und gleichzeitig das virtuelle Fahrzeug sehen kann. Hierdurch kann eine besonders hohe Sicherheit erreicht werden, da der Fahrer zum Sehen des virtuellen Fahrzeugs seinen Blick nicht von der Fahrbahn abwenden muss.

In einer weiteren vorteilhaften Ausgestaltung der Erfindung ist vorgesehen, dass der Fahrer durch das Variieren des virtuellen Fahrzeugs bei einem Spurwechsel und/oder bei einem Verlassen einer Fahrbahn und/oder bei einem Bilden einer Rettungsgasse und/oder bei einem Umfahren eines Gegenstands unterstützt wird. Beispielsweise wird der Fahrer beim Spurwechseln und/oder dem Verlassen der Fahrbahn und/oder dem Bilden der Rettungsgasse und/oder dem Umfahren des Gegenstands unterstützt, indem dem Fahrer durch eine Variation der Position des virtuellen Fahrzeugs relativ zum Anzeigeelement eine Positionsänderung des Kraftfahrzeugs relativ zu dessen Fahrbahn illustriert und somit vorgeschlagen wird. Alternativ oder zusätzlich kann dem Fahrer der Spurwechsel und/oder das Verlassen der Fahrbahn und/oder das Bilden der Rettungsgasse und/oder das Umfahren des Gegenstands vorgeschlagen werden, indem das virtuelle Fahrzeug mit einer aktivierten Fahrtrichtungsanzeige dargestellt wird. Die Darstellung der aktivierten Fahrtrichtungsanzeige kann beispielsweise erfolgen, indem zumindest der erste Teilbereich des virtuellen Fahrzeugs auf dem Anzeigeelement angezeigt wird und die Variation des ersten Teilbereichs unterbleibt, während der wenigstens eine von dem ersten Teilbereich unterschiedliche zweite Teilbereich des virtuellen Fahrzeugs variiert wird. Hieraus ergibt sich der Vorteil, dass der Fahrer besonders einfach auf den durchzuführenden Spurwechsel und/oder das durchzuführende Verlassen der Fahrbahn und/oder auf das durchzuführende Bilden der Rettungsgasse und/oder das durchzuführende Umfahren des Gegenstands aufmerksam gemacht werden kann.

Bei einer weiteren vorteilhaften Ausgestaltung der Erfindung ist es vorgesehen, dass das virtuelle Fahrzeug in Abhängigkeit von einem ausgewählten Fahrprofil des Kraftfahrzeugs angezeigt, insbesondere variiert wird. Hierbei ist unter dem Fahrprofil ein einem Fahrstil entsprechendes Fahrverhalten des Fahreres des Kraftfahrzeugs zu verstehen. Bei dem Fahrprofil kann es sich beispielsweise um ein besonders energieeffizientes Fahrverhalten (Eco-Fahrprofil), um ein besonders gleichmäßiges und ruhiges Fahrverhalten (Familien-Fahrprofil) und/oder um ein besonders rasantes Fahrverhalten (Sport-Fahrprofil) handeln. Das Fahrprofil kann beispielsweise vom Fahrer des Kraftfahrzeugs ausgewählt werden und das virtuelle Fahrzeug kann in Abhängigkeit von einer Auswahl des Fahrers hinsichtlich des Fahrprofils angezeigt, insbesondere variiert werden. Das Anzeigen, insbesondere Variiieren des virtuellen Fahrzeugs kann das energieeffiziente Fahrverhalten und/oder das gleichmäßige Fahrverhalten und/oder das rasante Fahrverhalten illustrieren, sodass das jeweilige ausgewählte Fahrverhalten dem Fahrer des Kraftfahrzeugs verkehrssituationsbedingt vorgeschlagen wird. Somit kann der Fahrer des Kraftfahrzeugs mittels seiner Auswahl die Unterstützung durch das Fahrerassistenzsystem an seine Wünsche hinsichtlich des Fahrverhaltens anpassen.

In diesem Zusammenhang hat es sich als vorteilhaft erwiesen, wenn ein Fahrverhalten des Fahrers ermittelt wird, wobei das virtuelle Fahrzeug abhängig von dem ermittelten Fahrverhalten des Fahrers des Kraftfahrzeugs angezeigt, insbesondere variiert wird. Dies bedeutet, dass das Fahrverhalten des Fahrers in unterschiedlichen Verkehrssituationen ermittelt wird und anschließend gespeichert wird. Das ermittelte Fahrverhalten des Fahrers wird von dem Fahrerassistenzsystem in das Anzeigen beziehungsweise in das Variieren des virtuellen Fahrzeugs mit einbezogen. So kann eine Unterstützung des Fahrers mittels des virtuellen Fahrzeugs an das ermittelte Fahrverhalten des Fahrers angepasst werden. Dies ermöglicht einen besonders hohen Komfort für den Fahrer, da dieser entsprechend seines Fahrverhaltens von dem Fahrerassistenzsystem unterstützt werden kann.

In weiterer vorteilhafter Ausgestaltung der Erfindung ist vorgesehen, dass wenigstens ein zumindest einen Teil der Umgebung des Kraftfahrzeugs charakterisierender Umgebungsparameter mittels wenigstens eines Umgebungssensors erfasst wird, wobei das virtuelle Fahrzeug in Abhängigkeit von dem Umgebungsparameter angezeigt, insbesondere variiert wird. Bei dem Umgebungsparameter kann es sich beispielsweise um eine Spurführung einer Fahrbahn des Kraftfahrzeugs handeln. Hierbei kann das virtuelle Fahrzeug beispielsweise in Abhängigkeit von der Spurführung der Fahrbahn des Kraftfahrzeugs derart hinsichtlich seiner Position relativ zum Anzeigeelement angezeigt werden, dass eine Anordnung des virtuellen Fahrzeugs auf der Fahrbahn vor dem Kraftfahrzeug illustriert wird. Alternativ kann es sich bei dem Umgebungsparameter um einen sich in der Umgebung des Kraftfahrzeugs befindenden Verkehrsteilnehmer handeln. Folglich kann beispielsweise der Umgebungsparameter derart in das Anzeigen beziehungsweise das Variieren des virtuellen Fahrzeugs mit einbezogen werden, dass die Unterstützung des Fahrers durch das Fahrerassistenzsystem den weiteren Verkehrsteilnehmer mit einbezieht. Dabei kann der Fahrer des Kraftfahrzeugs mittels des Variierens des virtuellen Fahrzeugs hinsichtlich eines Umfahrens und/oder Abbremsens und/oder Anhaltens in einem definierten Abstand zu dem weiteren Verkehrsteilnehmer unterstützt werden. Somit kann durch die Unterstützung des Fahrers eine besonders hohe Verkehrssicherheit geschaffen werden.

Es hat sich als weiterhin vorteilhaft gezeigt, wenn auf dem Anzeigeelement neben dem virtuellen Fahrzeug wenigstens ein weiteres Bild angezeigt wird. Bei dem weiteren Bild kann es sich beispielsweise um ein Piktogramm und/oder um ein Symbol und/oder um einen virtuellen Verkehrsteilnehmer handeln. Auf diese Weise können dem Fahrer des Kraftfahrzeugs besonders einfach besonders viele Informationen dargestellt werden.

Ein zweiter Aspekt der Erfindung betrifft ein Kraftfahrzeug mit einem Fahrerassistenzsystem, welches zum Durchführen eines Verfahrens gemäß dem ersten Aspekt der Erfindung ausgebildet ist.

Zu der Erfindung gehören auch Weiterbildungen und Vorteile des erfindungsgemäßen Kraftfahrzeugs, die Merkmale aufweisen, wie sie bereits im Zusammenhang mit dem Weiterbildungen und Vorteilen des erfindungsgemäßen Verfahrens beschrieben worden sind. Aus diesem Grund sind die entsprechenden Weiterbildungen und Vorteile des erfindungsgemäßen Kraftfahrzeugs hier nicht noch einmal beschrieben.

Im Folgenden ist ein Ausführungsbeispiel der Erfindung beschrieben.

Hierbei zeigt:
- Fig. 1: eine schematische Ansicht eines Cockpits eines Kraftfahrzeugs, welches ein Anzeigeelement aufweist, mittels oder auf welchem ein virtuelles Fahrzeug dargestellt wird; und
- Fig. 2: eine schematische Ansicht des Cockpits gemäß Fig. 1, wobei mittels des Anzeigeelements das virtuelle Fahrzeug angezeigt wird, welches mittels einer Fahrtrichtungsanzeige ein Verlassen einer Fahrspur illustriert.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

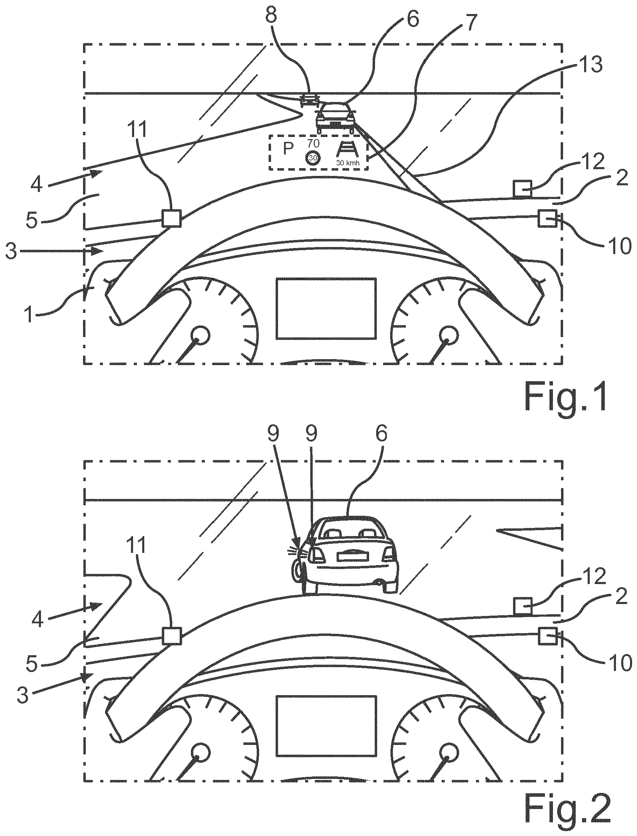

In den Fig. 1 und Fig. 2 ist jeweils in einer schematischen Ansicht eine Sicht eines Fahrers 1 eines Kraftfahrzeugs 2 entlang einer Fahrtrichtung des Kraftfahrzeugs 2 in Fahrzeuglängsrichtung nach vorne aus einem Cockpit 3 des Kraftfahrzeugs 2 in eine Umgebung 4 des Kraftfahrzeugs 2 dargestellt. Hierbei liegt in einer Sichtachse oder in dem Sichtbereich des Fahrers 1 ein Anzeigeelement 5, bei welchem es sich vorliegend um eine Windschutzscheibe des Kraftfahrzeugs 2 handelt. Durch dieses Anzeigeelement 5 kann der Fahrer 1 hindurch in die Umgebung 4 des Kraftfahrzeugs 2 blicken. Gleichzeitig kann auf das Anzeigeelement 5 ein virtuelles Bildelement projiziert werden, welches der Fahrer 1 bei einem Blick in die Umgebung 4 des Kraftfahrzeugs 2 wahrnehmen kann. Auf dem Anzeigeelement 5 wird dem Fahrer 1 vorliegend ein virtuelles Fahrzeug 6 angezeigt. Darüber hinaus ist auf dem Anzeigeelement 5 in Fig. 1 zusätzlich zu dem virtuellen Fahrzeug 6 ein weiteres virtuelles Bild 7 angezeigt, welches den Fahrer 1 über eine Höchstgeschwindigkeit, eine Fahrsituation sowie eine Navigationsvorgabe informiert. Vorliegend handelt es sich bei der Fahrsituation um ein sich vor dem Kraftfahrzeug 2 befindenden realen Verkehrsteilnehmer 8 sowie deren Relativgeschwindigkeit zueinander. Das virtuelle Fahrzeug 6 wird in der in Fig. 2 gezeigten Darstellung mittels des Anzeigeelements 5 mit einer aktivierten Fahrtrichtungsanzeige 9 dargestellt. Hierbei kann von dem Anzeigeelement 5 die Aktivierung der Fahrtrichtungsanzeige 9 dargestellt werden, indem der Teilbereich der Fahrtrichtungsanzeige 9 wenigstens einmal, insbesondere mehrmals, mit definierten Zeitabständen variiert wird, während ein von der Fahrtrichtungsanzeige 9 unterschiedlicher Rest des virtuellen Fahrzeugs 6 durchgehend unverändert dargestellt wird oder unabhängig von der Fahrtrichtungsanzeige 9 variiert wird.

Das Kraftfahrzeug 2 umfasst des Weiteren ein sowohl in Fig. 1 als auch in Fig. 2 schematisch durch ein Kästchen dargestelltes Fahrerassistenzsystem 10, mittels welchem der Fahrer 1 während einer Fahrt des Kraftfahrzeugs 2 unterstützt werden kann. Hierfür ist das Fahrerassistenzsystem 10 mit einer Projektionseinrichtung 11 des Kraftfahrzeugs 2 verbunden, mittels welcher das virtuelle Fahrzeug 6 auf das Anzeigeelement 5 projizierbar ist. Mittels des Fahrerassistenzsystems 10 kann zur Unterstützung des Fahrers 1 das mittels der Projektionseinrichtung 11 projizierte virtuelle Fahrzeug 6 hinsichtlich seiner Größe und/oder Position und/oder seiner Erscheinung auf dem Anzeigeelement 5 variiert werden, während das virtuelle Fahrzeug 6 auf dem Anzeigeelement 5 angezeigt wird. Eine Fahrtrichtungsänderung kann dem Fahrer 1 des Kraftfahrzeugs 2 vorgeschlagen werden, indem das virtuelle Fahrzeug 6 dahingehend variiert wird, dass es dem Fahrer 1 aus unterschiedlichen Ansichtswinkeln dargestellt wird.

Das Fahrerassistenzsystem 10 ist vorliegend mit der Projektionseinrichtung 11, bei welcher es sich um einen Kopf-Hoch-Bildschirm (Head-Up-Display) handelt, mit einer Navigationseinrichtung, mit einer Verkehrszeichenerkennungseinrichtung, mit einem Speicher von länderspezifischen Verkehrsregeln sowie mit einem Speicher für adaptive Fahrprofile verbunden.

Das Kraftfahrzeug 2 kann des Weiteren einen Umgebungssensor 12 umfassen, mittels welchem ein zumindest einen Teil der Umgebung 4 des Kraftfahrzeugs 2 charakterisierender Umgebungsparameter erfasst werden kann. Anschließend kann das virtuelle Fahrzeug 6 in Abhängigkeit von dem Umgebungsparameter angezeigt, insbesondere variiert werden. Vorliegend wird mittels des Umgebungssensors 12 eine Fahrspur 13 anhand einer Spurführung erfasst und das virtuelle Fahrzeug 6 derart mittels der Projektionseinrichtung 11 auf das Anzeigeelement 5 projiziert, dass das virtuelle Fahrzeug 6 sich für den Fahrer 1 des Kraftfahrzeugs 2 auf der Fahrspur 13 zu befinden scheint.

Dabei liegt dem Unterstützen des Fahrers 1 mittels des Fahrerassistenzsystems 10 der Gedanke zugrunde, dass es anstrengend ist, lange Zeit auf einer im Wesentlichen freien Autobahn zu fahren oder sich im Dunkeln auf einer kurvigen Landstraße zurecht zu finden. Des Weiteren ist es anstrengend, in einer unbekannten Stadt zu fahren oder alle Anzeigen des Kraftfahrzeugs 2 im Blick zu haben, um sich richtig im Verkehr zu verhalten. Es sollte darüber hinaus immer daran gedacht werden, dass eine Familie des Fahrers 1 besonders ruhig transportiert werden möchte. Darüber hinaus sind situationsabhängige Gefahrstellen zu beachten.

Im Gegensatz hierzu ist es bequem, hinter einem anderen Verkehrsteilnehmer 8 in einer Folgefahrt herzufahren, da dieser andere Verkehrsteilnehmer 8 einen stabilen Bezugspunkt in einem Verkehrsgeschehen bildet. Dies ist möglich, solange ein Fahrverhalten des anderen Verkehrsteilnehmers 8 einem eigenen Fahrstil entspricht. Des Weiteren ist die Folgefahrt eine sinnvolle Unterstützung des Fahrers 1, da automatisches Fahren momentan nicht erlaubt und/oder eine Zuverlässigkeit des automatischen Fahrens in gewissen Verkehrsabschnitten momentan noch nicht gegeben ist.

Bei dem virtuellen Fahrzeug 6 handelt es sich um eine dreidimensionale Projektion in eine Sichtachse des Fahrers 1 auf dem Head-Up-Display. Durch das virtuelle Fahrzeug 6 können verschiedenste Informationen in einer Anzeige gebündelt werden, welche auch sprach- und kulturübergreifend intuitiv verständlich ist. Eine Längsführung und eine Querführung des Kraftfahrzeugs 2 kann beim Fahrer 1 des Kraftfahrzeugs 2 bleiben. Die Unterstützung des Fahrers 1 ist bei Bedarf zuschaltbar und Mitfahrer bekommen davon nichts mit.

Um den Fahrer 1 in einer Längsführung des Kraftfahrzeugs 2 zu unterstützen, kann zur Illustrierung einer Beschleunigung das virtuelle Fahrzeug 6 dynamisch in seiner Größe verkleinert werden und/oder in seiner Position dynamisch entlang einer Fahrzeughochrichtung z angehoben werden um so eine sich vergrößernde Entfernung zwischen dem Kraftfahrzeug 2 und dem virtuellen Fahrzeug 6 zu illustrieren. Um den Fahrer 1 des Kraftfahrzeugs 2 zu einer Verzögerung beziehungsweise zu einem Abbremsen anzuregen, kann das virtuelle Fahrzeug 6 mittels der Projektionseinrichtung 11 auf dem Anzeigeelement 5 hinsichtlich seiner Größe dynamisch vergrößert werden und/oder in seiner Position entlang der Fahrzeughochrichtung z dynamisch abgesenkt werden, sodass dem Fahrer 1 eine Abstandsverringerung und somit ein Aufschließen zu dem virtuellen Fahrzeug 6 illustriert wird. Hinsichtlich einer Querführung kann der Fahrer 1 des Kraftfahrzeugs 2 unterstützt werden, indem ein empfohlener Fahrspurwechsel beim Abbiegen durch einen virtuellen Blinker am virtuellen Fahrzeug 6 und/oder durch eine Positionsänderung des virtuellen Fahrzeugs 6 entlang einer Fahrzeugquerrichtung y auf dem Anzeigeelement 5 illustriert wird. Durch eine Positionsänderung des virtuellen Fahrzeugs 6 entlang der Fahrzeugquerrichtung y kann dem Fahrer 1 alternativ oder zusätzlich eine Kurvenfahrt illustriert werden.

Um den Fahrer 1 hinsichtlich einer Gefahr zu informieren, kann das virtuelle Fahrzeug 6 auf dem Anzeigeelement 5 zumindest bereichsweise innerhalb von kurzen Zeitabständen abwechselnd dargestellt und nicht dargestellt werden. Alternativ oder zusätzlich kann auf dem Anzeigeelement 5 ein Warndreieck innerhalb von kurzen Zeitabständen abwechselnd dargestellt und nicht dargestellt werden. Darüber hinaus kann mittels des virtuellen Fahrzeugs 6 eine empfohlene Verhaltensweise in einer Sondersituation dargestellt werden, indem dem Fahrer 1 mittels des virtuellen Fahrzeugs 6 ein links- beziehungsweise rechts Ranfahren zum Bilden einer Rettungsgasse illustriert wird.

Hieraus ergeben sich die Vorteile, dass der Fahrer 1 besonders früh auf eine jeweilige Verkehrssituation reagieren kann. Des Weiteren vorteilhaft ist, dass die Unterstützung des Fahrers durch das Fahrerassistenzsystem 10 bei Bedarf zugeschaltet werden kann und das virtuelle Fahrzeug 6 nur in einer Sichtachse des Fahrers 1 angezeigt werden kann, sodass Mitfahrer von dem virtuellen Fahrzeug 6 nichts mitbekommen. Darüber hinaus sind mittels der Projektionseinrichtung 11 auf dem Anzeigeelement 5 Warnungen und Hinweise, wie sie von einem aufmerksamen Mitfahrer gegeben werden können, integrierbar. Hierbei kann es sich um eine Einblendung eines Schriftzugs mit "Vorsicht Blitzer" und/oder "Kinder schlafen" handeln. Eine technische Umsetzung ist vorteilhafterweise skalierbar von sehr einfach, bei Anwendung eines kombinier Head-Up-Displays bis sehr hochwertig bei Anwendung eines Erweiterte-Realität-Kopf-Hoch-Bildschirms (Augmented Reality Head-Up-Display) mit einer dreidimensionalen Projektion.

Grundsätzlich werden über Fahrerassistenzsysteme viele verschiedene Fahrinformationen berechnet und auf unterschiedliche Arten dargestellt. Bei einer virtuellen Folgefahrt sollen diese Fahrinformationen in das virtuelle Fahrzeug 6 projiziert werden. Hierfür kann das Fahrerassistenzsystem 10 mit der Navigationseinrichtung verbunden sein, um den Fahrer 1 durch das Variieren des virtuellen Fahrzeugs 6 bei einem Spurwechsel und/oder bei einem Verlassen einer Fahrbahn und/oder bei dem Bilden der Rettungsgasse und/oder beim Umfahren eines Gegenstands zu unterstützen. Des Weiteren ist das Fahrerassistenzsystem 10 mit der Verkehrszeichenerkennungseinrichtung verbunden, sodass dem Fahrer 1 mittels des virtuellen Fahrzeugs 6 in Abhängigkeit von einem mittels der Verkehrszeichenerkennungseinrichtung erkannten Verkehrszeichens eine Beschleunigung und/oder eine Konstantfahrt und/oder eine Verzögerung vorgeschlagen werden. Überdies ist das Fahrerassistenzsystem 10 mit einem Nachtsichtgerät verbunden, wodurch der Fahrer 1 mittels des virtuellen Fahrzeugs 6 bei einer nächtlichen Kurvenfahrt sowie bei Gefahren auf einer Landstraße, auf welcher sich das Kraftfahrzeug 2 befindet, unterstützt wird. Das Fahrerassistenzsystem 10 ist darüber hinaus mit dem Speicher verbunden, in welchem länderspezifische Verkehrsregeln gespeichert sind. Im Zusammenhang mit den länderspezifischen Verkehrsregeln kann das Fahrerassistenzsystem 10 nach Ermitteln eines aktuellen Orts des Kraftfahrzeugs 2 eine Variation des virtuellen Fahrzeugs 6 entsprechend der länderspezifischen Verkehrsregeln vorliegend im Hinblick auf Geschwindigkeitsniveaus und eines Beachtensgebots von Bussen unterstützen. Des Weiteren kann mittels des Fahrerassistenzsystems 10 das virtuelle Fahrzeug 6 entsprechend eines adaptiven Fahrprofils, welches von dem Fahrer 1 des Kraftfahrzeugs 2 ausgewählt wird, variieren. Bei dem jeweiligen Fahrprofil kann es sich vorliegend um ein energiesparendes Eco-Fahrprofil oder um ein rasantes Sport-Fahrprofil oder um ein gleichmäßiges und ruhiges Familien-Fahrprofil handeln. Dabei kann das jeweilige Fahrprofil vom Fahrer 1 eingestellt werden und ein neues Fahrverhalten durch den Fahrer 1 durch Nachfahren des mittels des virtuellen Fahrzeugs 6 vorgegebenen jeweiligen Fahrprofils erlernt werden.

Am Beispiel des Eco-Fahrprofils, bei welchem besonders viel Kraftstoff gespart werden kann, kann vorausschauendes Fahren nachgefahren werden. Wird mittels des Umgebungssensors 12 eine rote Ampel beispielsweise mittels einer Kameraeinrichtung erfasst, so kann das virtuelle Fahrzeug 6 eine dynamische Verringerung eines Abstands zwischen dem virtuellen Fahrzeug 6 und dem Kraftfahrzeug 2 illustrieren, was zu einem frühzeitigen vom-Gas-gehen des Fahrers 1 führen kann. Hierdurch kann der Fahrer 1 dazu angeregt werden, eine Bremswirkung eines Motors des Kraftfahrzeugs 2 zu nutzen. Des Weiteren kennt die Navigationseinrichtung eine Fahrstrecke des Kraftfahrzeugs 2 und ist darüber informiert, dass hinter einer nächsten Kurve ein Dorf ist und ein frühzeitiges Verringern auf eine Dorf-Durchfahrtsgeschwindigkeit wünschenswert ist. Dies kann dem Fahrer 1 vorgeschlagen werden, indem eine Abstandsverringerung zwischen dem virtuellen Fahrzeug 6 und dem Kraftfahrzeug 2 illustriert wird, sodass der Fahrer 1 frühzeitig vom Gas geht. Erkennt die mit dem Fahrerassistenzsystem 10 gekoppelte Verkehrszeichenerkennungseinrichtung ein Überholverbot und ein reales, langsamer als das Kraftfahrzeug 2 fahrendes, weiteres Kraftfahrzeug fährt vor dem Kraftfahrzeug 2, wird ein Überholvorgang mittels des virtuellen Fahrzeugs 6 dem Fahrer 1 nicht illustriert aufgrund des Überholverbots, obwohl das Fahrerassistenzsystem 10 ein besonders schnelles Fahrverhalten des Fahrers 1 kennt.

Bei einer Fahrt mit einer Familie sollte ein gemäßigter Fahrstil eingehalten werden. Für Fondpassagiere des Kraftfahrzeugs 2 sind besonders hohe Beschleunigungswerte unangenehm, da die Fondpassagiere zumeist ein Verkehrsgeschehen nicht überblicken können und Reaktionen des Fahrers 1 unvorhergesehen erscheinen. Aus diesem Grund sind Beschleunigungswerte von unterhalb 0,3 g (g-Kraft), welches einem Komfortbereich entspricht, einzuhalten. Ein maximaler Beschleunigungswert des Kraftfahrzeugs 2 kann mittels des Fahrerassistenzsystems 10 von dem Fahrer 1 empfangen werden und bei der Variation des virtuellen Fahrzeugs 6 mit einbezogen werden. Das virtuelle Fahrzeug 6 verhält sich dann genauso, wie es von der Familie beziehungsweise von mitfahrenden Personen gewünscht ist. Dies kann verhindern, dass der Fahrer 1 in eine gewohnte Fahrweise mit gegebenenfalls zu hohen Beschleunigungswerten verfällt.

Alternativ oder zusätzlich kann mittels des Fahrerassistenzsystems 10 ein Fahrverhalten des Fahrers 1 ermittelt werden und das virtuelle Fahrzeug 6 in Abhängigkeit von dem ermittelten Fahrverhalten des Fahrers 1 angezeigt, insbesondere variiert werden. Insbesondere speichert das Fahrerassistenzsystem 10 das Fahrverhalten des Fahrers 1 in definierten Verkehrssituationen und variiert das virtuelle Fahrzeug 6 in gleichen oder ähnlichen Verkehrssituationen in Abhängigkeit von dem gespeicherten Fahrverhalten des Fahrers 1.

Insgesamt zeigt das Beispiel, wie durch die Erfindung ein Folge-mir-Assistent (Follow-Me-Assistent) geschaffen werden um so die Unterstützung des Fahrers 1 mittels des Fahrerassistenzsystems 10 während der Fahrt des Kraftfahrzeugs 2 zu ermöglichen.

### Bezugszeichenliste

- 1: Fahrer
- 2: Kraftfahrzeug
- 3: Cockpit
- 4: Umgebung
- 5: Anzeigeelement
- 6: virtuelles Fahrzeug
- 7: Bild
- 8: Verkehrsteilnehmer
- 9: aktivierte Fahrtrichtungsanzeige
- 10: Fahrerassistenzsystem
- 11: Projektionseinrichtung
- 12: Umgebungssensor

## Patentansprüche

1. Verfahren zum Betreiben eines Fahrerassistenzsystems (10) eines Kraftfahrzeugs (2) während einer Fahrt des Kraftfahrzeugs (2), bei welchem dem Fahrer (1) des Kraftfahrzeugs (2) auf wenigstens einem Anzeigeelement (5) ein virtuelles Fahrzeug (6) angezeigt wird und zur Unterstützung des Fahrers (1) das virtuelle Fahrzeug (6) hinsichtlich seiner Größe und/oder Position und/oder seiner Erscheinung auf dem Anzeigeelement (5) variiert wird, während das virtuelle Fahrzeug (6) auf dem Anzeigeelement (5) angezeigt wird,
**dadurch gekennzeichnet, dass**
wenigstens ein aktueller Ort des Kraftfahrzeugs (2) ermittelt wird, wobei das virtuelle Fahrzeug (6) in Abhängigkeit von dem ermittelten Ort länderspezifisch und/oder regionenspezifisch angezeigt wird.

2. Verfahren nach Anspruch 1,
**dadurch gekennzeichnet, dass**
das virtuelle Fahrzeug (6) in seiner Erscheinung derart variiert wird, dass, während zumindest ein erster Teilbereich des virtuellen Fahrzeugs (6) auf dem Anzeigeelement (5) angezeigt wird und eine Variation des ersten Teilbereiches unterbleibt, wenigstens ein von dem ersten Teilbereich unterschiedlicher zweiter Teilbereich des virtuellen Fahrzeugs (6) variiert.

3. Verfahren nach Anspruch 1 oder 2,
**dadurch gekennzeichnet, dass**
das virtuelle Fahrzeug (6) in eine Sichtachse des Fahrers (1) auf das Anzeigeelement (5) mittels einer Projektionseinrichtung (11) projiziert wird.

4. Verfahren nach einem der vorhergehenden Ansprüche,
**dadurch gekennzeichnet, dass**
der Fahrer (1) durch das Variieren des virtuellen Fahrzeugs (6) bei einem Spurwechsel und/oder bei einem Verlassen einer Fahrbahn und/oder bei einem Bilden einer Rettungsgasse und/oder beim Umfahren eines Gegenstands unterstützt wird.

5. Verfahren nach einem der vorhergehenden Ansprüche,
**dadurch gekennzeichnet, dass**
das virtuelle Fahrzeug (6) in Abhängigkeit von einem ausgewählten Fahrprofil des Kraftfahrzeugs (2) angezeigt, insbesondere variiert, wird.

6. Verfahren nach einem der vorhergehenden Ansprüche,
**dadurch gekennzeichnet, dass**
ein Fahrverhalten des Fahrers (1) ermittelt wird, wobei das virtuelle Fahrzeug (6) in Abhängigkeit von dem ermittelten Fahrverhalten des Fahrers (1) des Kraftfahrzeugs (2) angezeigt, insbesondere variiert, wird.

7. Verfahren nach einem der vorhergehenden Ansprüche,
**dadurch gekennzeichnet, dass**
wenigstens ein zumindest einen Teil der Umgebung (4) des Kraftfahrzeugs (2) charakterisierender Umgebungsparameter mittels wenigstens eines Umgebungssensors (12) erfasst wird, wobei das virtuelle Fahrzeug (6) in Abhängigkeit von dem Umgebungsparameter angezeigt, insbesondere variiert, wird.

8. Verfahren nach einem der vorhergehenden Ansprüche,
**dadurch gekennzeichnet, dass**
auf dem Anzeigeelement (5) neben dem virtuellen Fahrzeug (6) wenigstens ein weiteres Bild (7) angezeigt wird.

9. Kraftfahrzeug (2) mit einem Fahrerassistenzsystem (10), welches zum Durchführen eines Verfahrens nach einem der Ansprüche 1 bis 8 eingerichtet ist.

## Claims

1. Method for operating a driver assistance system (10) of a motor vehicle (2) while the motor vehicle (2) is travelling, in which a virtual vehicle (6) is displayed to the driver (1) of the motor vehicle (2) on at least one display element (5), and in order to assist the driver (1), the virtual vehicle (6) is varied with regard to its size and/or position and/or appearance on the display element (5) while the virtual vehicle (6) is displayed on the display element (5),
**characterized in that**
at least one current location of the motor vehicle (2) is determined,
wherein the virtual vehicle (6) is displayed in a country-specific and/or region-specific manner depending on the determined location.

2. Method according to Claim 1,
**characterized in that**
the virtual vehicle (6) is varied in its appearance in such a way that, while at least a first sub-area of the virtual vehicle (6) is displayed on the display element (5) and a variation of the first sub-area is omitted, at least one second sub-area of the virtual vehicle (6) different from the first sub-area varies.

3. Method according to Claims 1 or 2,
**characterized in that**
the virtual vehicle (6) is projected onto the display element (5) in a viewing axis of the driver (1) by means of a projection device (11).

4. Method according to any one of the preceding claims,
**characterized in that**
the driver (1) is assisted by the virtual vehicle (6) being varied when changing lanes, and/or when leaving a roadway, and/or when forming an emergency lane, and/or when driving around an object.

5. Method according to any one of the preceding claims,
**characterized in that**
the virtual vehicle (6) is displayed, in particular varied, depending on a selected driving profile of the motor vehicle (2).

6. Method according to any one of the preceding claims,
**characterized in that**
a driving behavior of the driver (1) is determined, wherein the virtual vehicle (6) is displayed, in particular varied, depending on the determined driving behavior of the driver (1) of the motor vehicle (2).

7. Method according to any one of the preceding claims,
**characterized in that**
at least one environmental parameter characterizing at least a portion of the environment (4) of the motor vehicle (2) is captured by means of at least one environmental sensor (12), wherein the virtual vehicle (6) is displayed, in particular varied, depending on the environmental parameter.

8. Method according to any one of the preceding claims,
**characterized in that**
at least one further image (7) is displayed on the display element (5) next to the virtual vehicle (6).

9. Motor vehicle (2) having a driver assistance system (10) that is set up to carry out a method according to any one of Claims 1 to 8.

## Revendications

1. Procédé pour faire fonctionner un système d'aide à la conduite (10) d'un véhicule à moteur (2) pendant un trajet du véhicule à moteur (2), dans lequel un véhicule virtuel (6) est affiché pour le conducteur (1) du véhicule à moteur (2) sur au moins un élément d'affichage (5) et, pour aider le conducteur (1), le véhicule virtuel (6) est modifié en ce qui concerne sa taille et/ou sa position et/ou son apparence sur l'élément d'affichage (5), pendant que le véhicule virtuel (6) est affiché sur l'élément d'affichage (5),
**caractérisé en ce que**
au moins une localité actuelle du véhicule à moteur (2) est déterminée, le véhicule virtuel (6) étant affiché en fonction de la localité déterminée de manière spécifique au pays et/ou spécifique à la région.

2. Procédé selon la revendication 1,
**caractérisé en ce que**
l'apparence du véhicule virtuel (6) est modifiée de telle manière que, pendant qu'au moins une première partie du véhicule virtuel (6) est affichée sur l'élément d'affichage (5) et qu'une modification de la première partie n'a pas lieu, au moins une seconde partie du véhicule virtuel (6), différente de la première partie, est modifiée.

3. Procédé selon la revendication 1 ou 2,
**caractérisé en ce que**
le véhicule virtuel (6) est projeté sur l'élément d'affichage (5) dans un axe de vue du conducteur (1) au moyen d'un dispositif de projection (11).

4. Procédé selon l'une quelconque des revendications précédentes, **caractérisé en ce que**
le conducteur (1) est aidé par la modification du véhicule virtuel (6) lors d'un changement de voie et/ou lors de la sortie d'une voie de circulation et/ou lors de la formation d'une voie d'urgence et/ou lors du contournement d'un objet.

5. Procédé selon l'une quelconque des revendications précédentes, **caractérisé en ce que**
le véhicule virtuel (6) est affiché, en particulier modifié, en fonction d'un profil de conduite sélectionné du véhicule à moteur (2).

6. Procédé selon l'une quelconque des revendications précédentes, **caractérisé en ce que**
un comportement au volant du conducteur (1) est déterminé, le véhicule virtuel (6) étant affiché, en particulier modifié, en fonction du comportement au volant déterminé du conducteur (1) du véhicule à moteur (2).

7. Procédé selon l'une quelconque des revendications précédentes, **caractérisé en ce que**
au moins un paramètre d'environnement caractérisant au moins une partie de l'environnement (4) du véhicule à moteur (2) est détecté au moyen d'au moins un capteur d'environnement (12), le véhicule virtuel (6) étant affiché, en particulier modifié, en fonction du paramètre d'environnement.

8. Procédé selon l'une quelconque des revendications précédentes, **caractérisé en ce que**
au moins une autre image (7) est affichée sur l'élément d'affichage (5) à côté du véhicule virtuel (6).

9. Véhicule à moteur (2) comportant un système d'aide à la conduite (10), qui est configuré pour exécuter un procédé selon l'une quelconque des revendications 1 à 8.
